# EUROPEAN PATENT SPECIFICATION

(11) **EP 2 982 935 B1**
(45) Date of publication and mention of the grant of the patent: **10.01.2018**
(21) Application number: 13881337.3
(22) Date of filing: 01.04.2013
(51) Int. Cl.: G01C 21/36

(54) **DISPLAY DEVICE, CONTROL METHOD, PROGRAM, AND STORAGE MEDIUM**
ANZEIGEVORRICHTUNG, STEUERUNGSVERFAHREN, PROGRAMM UND SPEICHERMEDIUM
DISPOSITIF D'AFFICHAGE, PROCÉDÉ DE COMMANDE, PROGRAMME ET SUPPORT DE STOCKAGE

(43) Date of publication of application: 10.02.2016
(73) Proprietor: Pioneer Corporation, Tokyo 113-0021 (JP)
(72) Inventor: TANABE, Manabu, Kawagoe-shi Saitama 350-8555 (JP); HASEGAWA, Hitoshi, Kawagoe-shi Saitama 350-8555 (JP)
(74) Representative: Viering, Jentschura & Partner mbB Patent- und Rechtsanwälte
(86) International application number: PCT/JP2013/059882
(87) International publication number: WO 2014/162419

(56) References cited:
- WO-A2-2005/076751
- JP-A- H09 127 862
- JP-A- 2008 020 225
- JP-A- 2010 066 042

## Description

### TECHNICAL FIELD

The present invention relates to a display technology.

### BACKGROUND TECHNIQUE

Conventionally, there is a technique for a head-up display which lets an image indicating information on driving operation of the vehicle be seen from the eye location (eye point) of the driver as a virtual image. For example, Patent Reference-1 discloses a technique for displaying, over the scenery which occupants actually see, an image information indicating an object at a position corresponding to the object seen in the front scenery of the running vehicle.

Patent Reference-1: Japanese Patent Application Laid-open under No. 2005-098912

### DISCLOSURE OF INVENTION

### PROBLEM TO BE SOLVED BY THE INVENTION

When an image information indicating an object seen in the front scenery is displayed at the position corresponding to the object, the display position of the above-mentioned image information varies depending on the relative position between the object and the vehicle which varies as the vehicle moves. In such a case that the relative position between the object and the vehicle varies rapidly, the driver's attention could be distracted since the display position of the image information transits rapidly as well.

The above is an example of the problem to be solved by the present invention. An object of the present invention is to provide a display device capable of suppressing the distraction of the driver' s attention due to the display of the image information such as a mark indicating the object.

### MEANS FOR SOLVING THE PROBLEM

One invention is a display device configured to display a mark indicating an object existing in front of a moving body, the display device including: a display unit configured to display the mark at a position corresponding to the object existing in scenery in front of the moving body or in an image indicating the scenery; and a display control unit configured to change a display state of the mark depending on a change rate of direction where the object exists with respect to traveling direction of the moving body.

Another invention is a control method executed by a display device which displays a mark indicating an object existing in front of a moving body, the control method including a display control process to display the mark at a position corresponding to the object existing in scenery in front of the moving body or in an image indicating the scenery, wherein the display control process changes a display state of the mark depending on a change rate of direction where the object exists with respect to traveling direction of the moving body.

Still another invention is a program executed by a computer which controls a display device to display a mark indicating an object existing in front of a moving body, making the computer function as: a display control unit configured to display the mark at a position corresponding to the object existing in scenery in front of the moving body or in an image indicating the scenery, wherein the display control unit is configured to change a display state of the mark depending on a change rate of direction where the object exists with respect to traveling direction of the moving body.

### BRIEF DESCRIPTION OF THE DRAWINGS

FIG. 1 illustrates the schematic configuration of a display system.
FIG. 2 illustrates the schematic configuration of a navigation device.
FIG. 3 illustrates the schematic configuration of a head-up display.
FIG. 4 illustrates the schematic configuration of a light source unit.
FIG. 5 is a flowchart for displaying a facility mark.
FIGS. 6A and 6B are overhead views illustrating a vehicle running on a straight roadway passing through the front of facilities.
FIGS. 7A and 7B illustrate display examples of the head-up display before and after the directional change rate corresponding to a facility becomes equal to or higher than a threshold.
FIGS. 8A and 8B each illustrates an overhead view illustrating a vehicle running on a curved roadway existing between facilities.
FIGS. 9A and 9B illustrate display examples of the head-up display before and after the directional change rate corresponding to a facility becomes equal to or higher than a threshold.
FIGS. 10A and 10B each illustrates a side view of a vehicle descending a slope road.
FIGS. 11A and 11B illustrate display examples of the head-up display before and after the directional change rate corresponding to a facility becomes equal to or higher than a threshold.

### DETAILED DESCRIPTION OF THE PREFERRED EMBODIMENTS

According to a preferable embodiment of the present invention, there is provided a display device configured to display a mark indicating an object existing in front of a moving body, the display device including: a display unit configured to display the mark at a position corresponding to the object existing in scenery in front of the moving body or in an image indicating the scenery; and a display control unit configured to change a display state of the mark depending on a change rate of direction where the object exists with respect to traveling direction of the moving body.

The above display device includes a display unit and a display control unit, and displays a mark indicating an object existing in front of a moving body. The display unit is configured to display the mark at a position corresponding to the object existing in scenery in front of the moving body or in an image indicating the scenery. The term "mark" herein includes any kind of display indicating an object and is configured of a character, a figure, a sign or any combination among them, for example. The display control unit is configured to change a display state of the mark depending on a change rate of direction where the object exists with respect to traveling direction of the moving body. According to this mode, the display device can properly suppress the distraction of the driver's attention.

In one mode of the display device, the display control unit is configured not to display the mark in a case that the change rate of the direction where the object exists is equal to or higher than a first predetermined value. In this way, the display device hides any mark whose display position varies rapidly. Thereby, the display device can properly suppress the distraction of the driver's attention.

In another mode of the display device, the display control unit is configured to set luminance of the mark to be displayed in a case that the change rate of the direction where the object exists is equal to or higher than a first predetermined value to a value lower than the luminance of the mark to be displayed in a case that the change rate is lower than the first predetermined value. Thereby, the display device obscures any mark whose display position varies rapidly to properly suppress the distraction of the driver's attention.

In still another mode of the display device, the display device further includes a curve detection unit configured to detect that the moving body is running on a curve, and the display control unit is configured to change the display state of the mark depending on whether or not the change rate is equal to or higher than a second predetermined value higher than the first predetermined value when the curve detection unit detects that the moving body is running on a curve. Generally, at the time of the moving body running on a curved roadway, the change rate of the direction of the object with respect to the moving body becomes large. Thus, at the time of the moving body running on a curved roadway, the display device raises the threshold against the change rate of the direction of the object with respect to the moving body. Thereby, the display device can suppress hiding too many marks or lowering their luminance.

In still another mode of the display device, the display control unit is configured to change the display state of the mark depending on the change rate of the direction where the object exists in height. Even according to this mode, the display device can properly suppress the distraction of the driver's attention due to the rapid change of the display position of the mark(s) to be displayed.

In still another mode of the display device, the display device further includes a setting unit configured to set a destination or a transit point, and the display unit is configured to display a mark indicating the destination or the transit point at a position corresponding to the destination or the transit point, and the display control unit is configured to change the display state of the mark indicating the object other than the mark indicating destination or the transit point depending on the change rate of the direction where the object exists. According to this mode, the display device can preferably suppress the driver from overlooking the destination or the transit point.

In still another mode of the display device, the display unit is configured to display a mark of a facility serving as a landmark of a route to the destination or the transit point at a position corresponding to the facility serving as the landmark, and the display control unit is configured to change the display state of the mark indicating the object other than the mark indicating the facility serving as the landmark depending on the change rate of the direction where the object exists. According to this mode, the display device can preferably suppress the driver from overlooking a facility serving as a landmark of the route to the destination or the transit point.

According to another preferable embodiment of the present invention, there is provided a control method executed by a display device which displays a mark indicating an object existing in front of a moving body, the control method including a display control process to display the mark at a position corresponding to the object existing in scenery in front of the moving body or in an image indicating the scenery, wherein the display control process changes a display state of the mark depending on a change rate of direction where the object exists with respect to traveling direction of the moving body. By executing the above-mentioned control method, the display device can properly suppress the distraction of the driver's attention.

According to still another preferable embodiment of the present invention, there is provided a program executed by a computer which controls a display device to display a mark indicating an object existing in front of a moving body, making the computer function as: a display control unit configured to display the mark at a position corresponding to the object existing in scenery in front of the moving body or in an image indicating the scenery, wherein the display control unit is configured to change a display state of the mark depending on a change rate of direction where the object exists with respect to traveling direction of the moving body. By executing the program, the computer can let the display device display a mark indicating an object existing in front of a moving body so that the distraction of the driver's attention can be suppressed. In a preferred example, the above program is stored in a recording medium.

### EMBODIMENT

Now, a preferred embodiment of the present invention will be described below with reference to the attached drawings.

### [System Configuration]

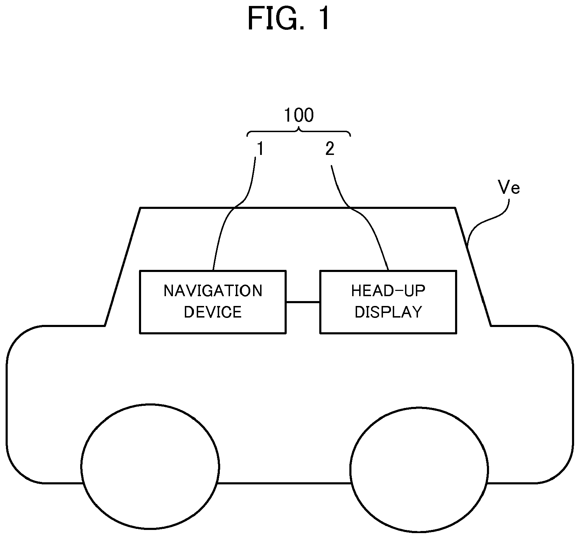

FIG. 1 illustrates an example of the configuration of a display system 100 according to the embodiment. As illustrated in FIG. 1, the display system 100 is mounted on a vehicle Ve and includes a navigation device 1 and a head-up display 2. It is noted that all functions of the navigation device 1 may be incorporated into the head-up display 2 instead of the configuration illustrated in FIG. 1.

The navigation device 1 has a guide function of a route from a departure place to a destination. Examples of the navigation device 1 include a stationary navigation device installed on a vehicle, a PND (Portable Navigation Device) and a cell phone such as a smart phone.

The head-up display 2 generates an image (referred to as "guide image") indicating guide information for assisting the driving operation such as map information indicating the present position, route guide information and a running speed, and lets the driver visually recognize the guide image as a virtual image from the position of the eye (eye point) of the driver. The head-up display 2 according to the embodiment displays a mark (referred to as "facility mark") indicating a facility included in the front scenery in such a state that the display position of the mark corresponds to the facility. The navigation device 1 supplies the head-up display 2 with various kinds of information used for the navigation processing such as the position of the vehicle Ve, the running speed of the vehicle Ve, map information and facility data.

It is noted that the navigation device 1 may be held by a cradle if the navigation device 1 is a cell phone such as a smart phone. In this case, the navigation device 1 may exchange the information with the head-up display 2 via the cradle.

### [Configuration of Navigation Device]

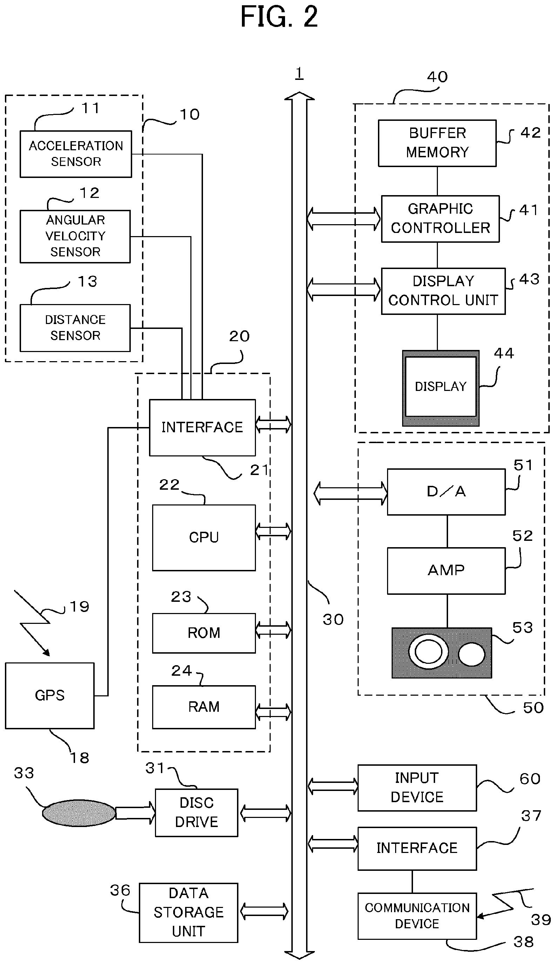

FIG. 2 illustrates a device configuration of the navigation device 1. As shown in FIG. 2, the navigation device 1 includes a stand-alone position measurement device 10, a GPS receiver 18, a system controller 20, a disc drive 31, a data storage unit 36, a communication interface 37, a communication device 38, a display unit 40, a sound output unit 50, and an input device 60.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle Ve and outputs the acceleration data. The angular velocity sensor 12 includes a vibration gyroscope, for example, and detects the angular velocity of the vehicle Ve at the time of changing the direction of the vehicle Ve and outputs the angular velocity data and the relative direction data. The distance sensor 13 measures vehicle speed pulses including a pulse signal generated with the wheel rotation of the vehicle Ve.

The GPS receiver 18 receives an electric wave 19 for transmitting downlink data including position measurement data fromplural GPS satellites, which is used for detecting the absolute position (hereinafter referred to as "present position ") of the vehicle from longitude and latitude information.

The system controller 20 includes an interface 21, a CPU (Center Processing Unit) 22, a ROM (Read Only Memory) 23 and a RAM (Random Access Memory) 24, and is configured to control the entire navigation device 1. For example, the system controller 20 determines the destination or a transit point based on the input by the input device 60 thereby to execute processing necessary for routing assistance to reach the determined destination or the transit point.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20. The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The system controller 20, the disc drive 31 such as a CD-ROM drive or a DVD-ROM drive, the data storage unit 36, the communication interface 37, the display unit 40, the sound output unit 50 and the input device 60 are connected to each other via a bus line 30.

Under the control of the system controller 20, the disc drive 31 reads contents data such as sound data and video data from a disc 33 such as a CD and a DVD to output the contents data. The disc drive 31 may be the CD-ROM drive or the DVD-ROM drive, or may be a drive compatible between the CD and the DVD.

The data storage unit 36 includes a HDD, for example, and stores various kinds of data used for a navigation process such as map data. The map data includes road data and facility information on each facility. The road data is expressed by links corresponding to roads and nodes corresponding to connection parts (intersections) of roads. For example, the facility information includes information on facility marks each of which is to be displayed per registered facility and positional information of each registered facility.

The communication device 38 includes an FM tuner or a beacon receiver, a mobile phone and a dedicated communication card for example, and receives road traffic information such as traffic jam information and traffic information and other information delivered from a VICS (Vehicle Information Communication System) center via the communication interface 37. The communication device 38 sends the head-up display 2 various kinds of information used for the navigation processing such as information on the guide route determined by the system controller 20.

The display unit 40 displays various kinds of display data on a display screen of a display 44 under the control of the system controller 20. Concretely, the system controller 20 reads the map data from the data storage unit 36, and the display unit 40 displays, on its display screen, the map data read from the data storage unit 36 by the system controller 20. The display unit 40 includes a graphic controller 41 for controlling the entire display unit 40 on the basis of the control data transmitted from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 is formed by a liquid crystal display device of the opposite angle 5-10 inches, and is mounted in the vicinity of a front panel of the vehicle.

The sound output unit 50 includes a D/A converter 51 for executing D/A (Digital to Analog) conversion of the sound digital data transmitted from the CD-ROM drive 31, a DVD-ROM 32 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of the display 44 and a front panel of a main body of an on-vehicle electric system loaded on the vehicle . Additionally, in such a case that the display 44 is in a touch panel system, a touch panel provided on the display screen of the display 44 also functions as the input device 60. The input device 60 accepts any input necessary for the system controller 20 to set the destination or a transit point. A pair of the input device 60 and the system controller 20 is an example of "the setting unit" according to the present invention.

### [Configuration of Head-up Display]

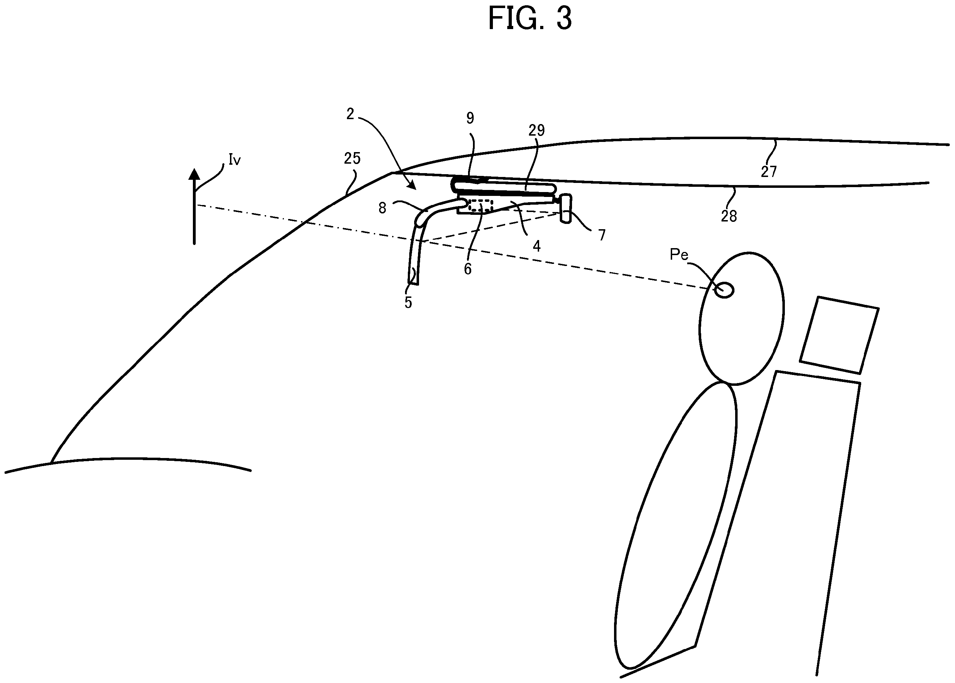

FIG. 3 schematically illustrates the head-up display 2 installed on the interior of the vehicle Ve. FIG. 3 is a side view of the driving seat in a vehicle and the driver sits on the seat in the vehicle. Over the head of the driver, there is provided a roof (plate) 27 which constitutes the outline of the vehicle. Under the roof 27, there is provided a ceiling board 28 which constitutes the inner decoration of the vehicle. In front of the driver, there is provided a front window 25 and a sun visor 29 of the vehicle.

The head-up display 2 is provided in a diagonally upper forward direction with respect to the driver. The head-up display 2 mainly includes a main unit 4, a combiner 5, a screen unit 7, connecting members 8 and a clip unit 9.

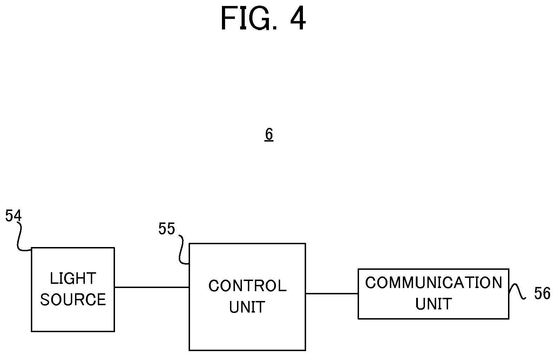

The light source unit 6, which is housed in the main unit 4, projects onto the screen unit 7 the light constituting an intermediate image which illustrates information to be seen by the observer. The concrete configuration of the light source unit 6 will be described later with reference to FIG. 4.

The combiner 5 is an optical element onto which the light constituting the intermediate image generated by the screen unit 7 is projected and which reflects a part of the projected light to the eye point "Pe" of the driver to let the driver see the virtual image Iv. It is noted that the arrow is directed to the upper direction of the virtual image Iv. The surface of the combiner 5 for reflecting the display light is formed into a substantial concave shape. Thereby, the combiner 5 enlarges the display size of the virtual image Iv. The combiner 5 is an example of "the display unit" according to the present invention.

The connecting members 8 extend towards the front window 25 in order to sandwich and hold the combiner 5. An example of the connecting members 8 is a pair of arms, and one side of the edges of the connecting members 8 are attached to both side surfaces of the main unit 4 while the other edges of the connecting members 8 on the other side sandwich and hold the combiner 5.

The screen unit 7 is a reflective optical member which generates the intermediate image and functions as an exit pupil expander (EPE). For example, on the surface of the screen unit 7 which the light emitted from the light source unit 6 enters, there is provided microlens array formed by plural arranged microlenses, and the surface opposite to the microlens array functions as a reflection surface . In another example of the screen unit 7, the screen unit 7 may be a transmission-type optical member instead of a reflective optical member according to the embodiment. Even in this case, the screen unit 7 has a microlens array formed by plural arranged microlenses and functions as an exit pupil expander of the light projected from the light source unit 6 thereby to emit the light for displaying an image towards the combiner 5.

The clip unit 9 is provided on the top surface of the main unit 4 facing the ceiling board 28, and fixes the main unit 4 to the sun visor 29 by sandwiching the sun visor 29. The clip unit 9 is a plate elastic body bent in a state that the cross-section surface is shaped into like a J character. The clip unit 9 has elastic force applied towards the direction that the sun visor 29 is sandwiched.

### [Configuration of Light Source Unit]

FIG. 4 schematically illustrates the configuration of the light source unit 6. As illustrated in FIG. 4, the light source unit 6 includes a light source 54, a control unit 55 and a communication unit 56.

The light source 54 includes laser light sources corresponding to red, blue and green, and projects the light (referred to as "display light") for displaying an image onto the combiner 5 under the control of the control unit 55. Under the control of the control unit 55, the communication unit 56 receives various kind of information used for navigation processing from the navigation device 1. For example, the communication unit 56 receives information on a guide route from the navigation device 1 when the destination is determined.

The control unit 55 includes a CPU, a ROM which stores control programs and data used by the CPU, and a RAM in which various kinds of data are sequentially read out and stored as a working memory, and performs a general control of the head-up display 2. For example, on the basis of the information on the guide route acquired from the navigation device 1, the control unit 55 lets the light source 54 emit the light for displaying the guide image thereby to display on the combiner 5 the guide image over the scenery in front of the driver.

Specifically, the control unit 55 according to the embodiment recognizes each facility included in the front scenery thereby to display the facility mark thereof in the state that the display position of the facility mark corresponds to the facility. In this case, firstly, on the basis of measurement information generated by the GPS receiver 18 and measurement information generated by the stand-alone position measurement device 10 both of which are acquired from the navigation device 1, the control unit 55 recognizes the position and the traveling direction of the vehicle Ve. Then, with reference to the facility information stored on the data storage unit 36, the control unit 55 displays facility marks corresponding to any facility which exists near the vehicle Ve and whose deviation from the traveling direction of the vehicle Ve is within a predetermined angle. The control unit 55 is an example of "the display control unit", "the curve detection unit" and "the computer" according to the present invention.

### [Display of Facility Mark]

Next, a description will be given of the display method of facility marks according to the embodiment. In summary, regarding a facility (referred to as "low priority facility Ptag") whose display priority is low despite existing at a position where the facility mark is to be displayed, the control unit 55 does not display any facility mark corresponding to the low priority facility Ptag whose directional change rate with respect to the vehicle Ve is equal to or higher than a predetermined threshold. Thereby, the control unit 55 can suppress the distraction of the driver's attention due to the rapid change of the position of the facility mark.

### (1) Process Flow

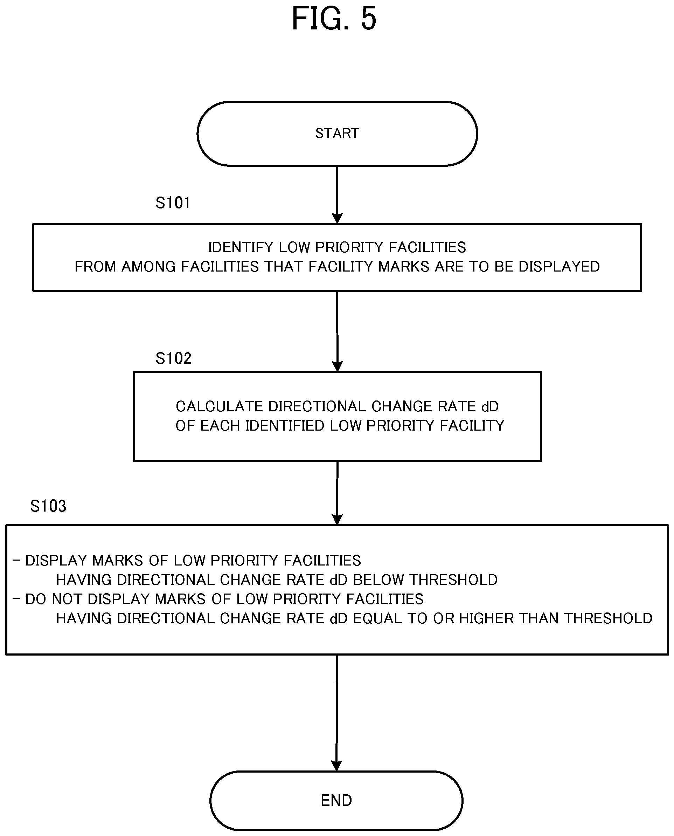

FIG .5 is a flowchart illustrating the display process of facility marks according to the embodiment. The control unit 55 repeatedly executes the process of the flowchart illustrated in FIG. 5.

The control unit 55 recognizes the low priority facility Ptag in the front scenery from among facilities existing at such a position that the facility mark thereof is to be displayed (step S101). In this case, for example, the combiner 5 identifies, as the low priority facility Ptag, a facility within the display target area of the facility mark other than the facility set as the destination or a transit point. In another example, the control unit 55 identifies, as the low priority facility Ptag, a facility within the target display area of the facility mark other than a facility serving as a landmark of an intersection to be recognized as a branching point of the route to the destination or the transit point. The low priority facility Ptag is an example of the "object" according to the present invention.

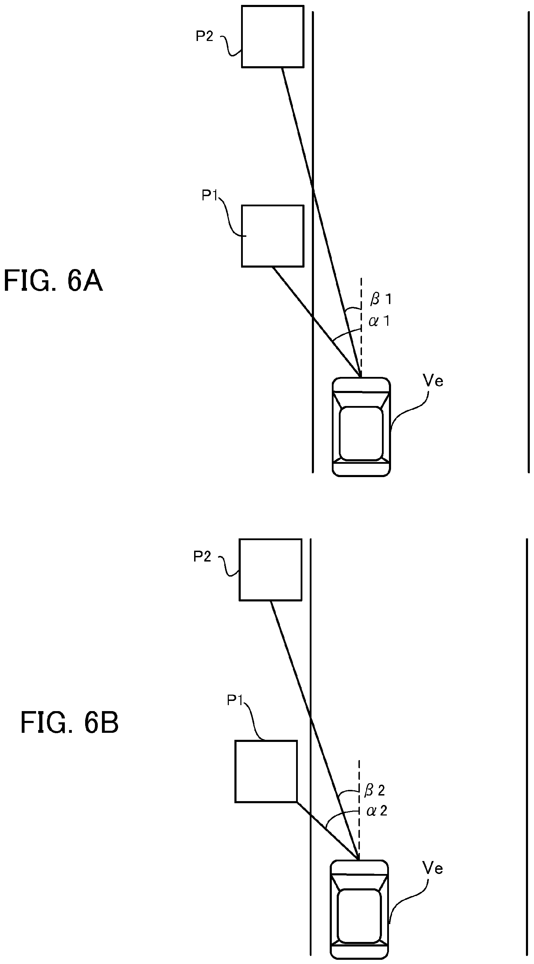

Next, the control unit 55 calculates the amount (referred to as "directional change rate dD") of the variation of the direction per unit time with respect to each low priority facility Ptag recognized at step S101 with respect to the vehicle Ve (step S102) . Concretely, the control unit 55 calculates the angle between the direction of the low priority facility Ptag and the traveling direction of the vehicle Ve at intervals of unit time (e.g., one second) . Then, the control unit 55 calculates the variation amount of the calculated angle in the interval of the unit time as the directional change rate dD. The concrete calculation method of the directional change rate dD will be described later with reference to FIGS. 6A to 9B.

Then, the control unit 55 displays the facility mark(s) corresponding to the low priority facility Ptag whose directional change rate dD is lower than a predetermined threshold (referred to as "threshold dDth") while hiding the facility mark(s) corresponding to the low priority facility Ptag whose directional change rate dD is equal to or higher than the threshold dDth (step S103). The above-mentioned threshold dDth is determined through experimental trials in consideration of the possibility of the distraction of the driver's attention, for example. The threshold dDth is an example of "the first predetermined value" according to the present invention. Thus, the control unit 55 can suppress the distraction of the driver's attention by hiding the facility mark(s) whose display position rapidly changes.

### (2) Concrete Examples

Next, each description will be given of display process of the facility mark according to the embodiment in case where the vehicle Ve runs on a straight roadway and case where the vehicle Ve runs on a curved roadway, respectively.

### (2-1) Straight roadway

FIG. 6A is an overhead view illustrating the vehicle Ve running on a straight roadway passing through the front of the facilities P1 and P2. FIG. 6B is an overhead view illustrating the example after a unit time has passed since the state of FIG. 6A.

In the case of FIG. 6A, firstly, on the basis of the present position of the vehicle Ve, the traveling direction of the vehicle Ve and facility information on the facilities P1 and P2 registered on the facility information database, the control unit 55 identifies each of the facilities P1 and P2 as a low priority facility Ptag. Furthermore, the control unit 55 recognizes that the facility P1 exists on the left of the traveling direction of the vehicle Ve by the angle "α1" and that the facility P2 exists on the left of the traveling direction of the vehicle Ve by the angle "β1".

Then, in the case of FIG. 6B after the unit time has passed since the case of FIG. 6A, the control unit 55 calculates again the angles of the facilities P1 and P2, each of which is the low priority facility Ptag, with respect to the traveling direction of the vehicle. In this case, the control unit 55 recognizes that the facility P1 exists on the left of the traveling direction of the vehicle Ve by the angle "α2" and that the facility P2 exists on the left of the traveling direction of the vehicle Ve by the angle "β2".

Then, in this case, the control unit 55 calculates the absolute value (i.e., |α2 - α1|) of the difference between the angle α1 and the angle α2 as the directional change rate dD corresponding to the facility P1 while calculating the absolute value (i.e., |β2 - β1|) of the difference between the angle β1 and the angle β2 as the directional change rate dD corresponding to the facility P2. In this case, it is noted that the directional change rate dD (i.e., |α2 -α1|) corresponding to the facility P1 near the vehicle Ve is higher than the directional change rate dD (i.e., |β2 - β1|) corresponding to the facility P2 as illustrated in FIGS. 6A and 6B.

Then, the control unit 55 compares each of the calculated directional change rate dD corresponding to the facility P1 and the calculated directional change rate dD corresponding to the facility P2 to the threshold dDth, and determines the display/non-display of the facility mark corresponding to each facility based on the comparison result.

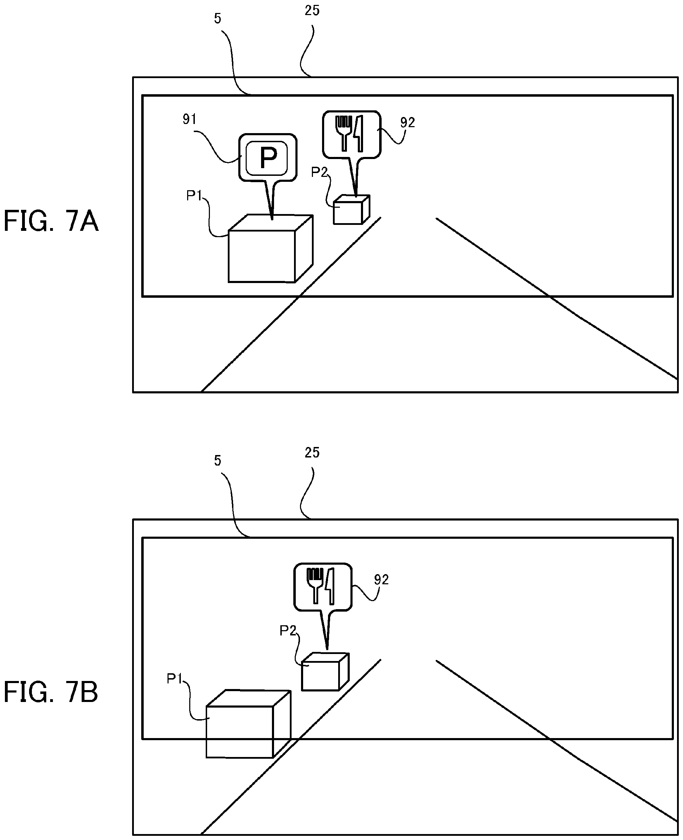

FIG. 7A is a display example of the head-up display 2 before the directional change rate dD corresponding to the facility P1 becomes equal to or higher than the threshold dDth, and FIG. 7B a display example of the head-up display 2 after the directional change rate dD corresponding to the facility P1 becomes equal to or higher than the threshold dDth.

In the case of FIG. 7A, since the directional change rate dD corresponding to the facility P1 is lower than the threshold dDth, the control unit 55 displays on the combiner 5 the balloon 91 indicating the information on the facility P1 at the position corresponding to the facility P1 in the scenery. Specifically, the control unit 55 herein displays on the combiner 5 the balloon 91 indicating a parking as the facility mark of the facility P1. In the same way, since the directional change rate dD corresponding to the facility is lower than the threshold dDth, the control unit 55 displays on the combiner 5 the balloon 92 indicating the information on the facility P2 at the position corresponding to the facility P2 in the scenery. Specifically, the control unit 55 herein displays on the combiner 5 the balloon 92 indicating a restaurant as the facility mark of the facility P2.

In the case of FIG. 7B, the control unit 55 does not display the balloon 91 since the control unit 55 recognizes that the directional change rate dD corresponding to the facility P1 is equal to or higher than the threshold dDth. Thereby, the control unit 55 can suppress the distraction of the driver's attention due to the rapid transition of the position of the balloon 91 that is the facility mark of the facility P1. In contrast, the control unit 55 continues to display the balloon 92 since the directional change rate dD corresponding to the facility P2 is equal to or lower than the threshold dDth.

In this way, by hiding the facility mark of the facility close to the vehicle Ve at the time of running on a straight roadway, the control unit 55 can preferably suppress the distraction of the driver's attention due to the rapid transition of the position of the facility mark.

### (2-2) Curved Roadway

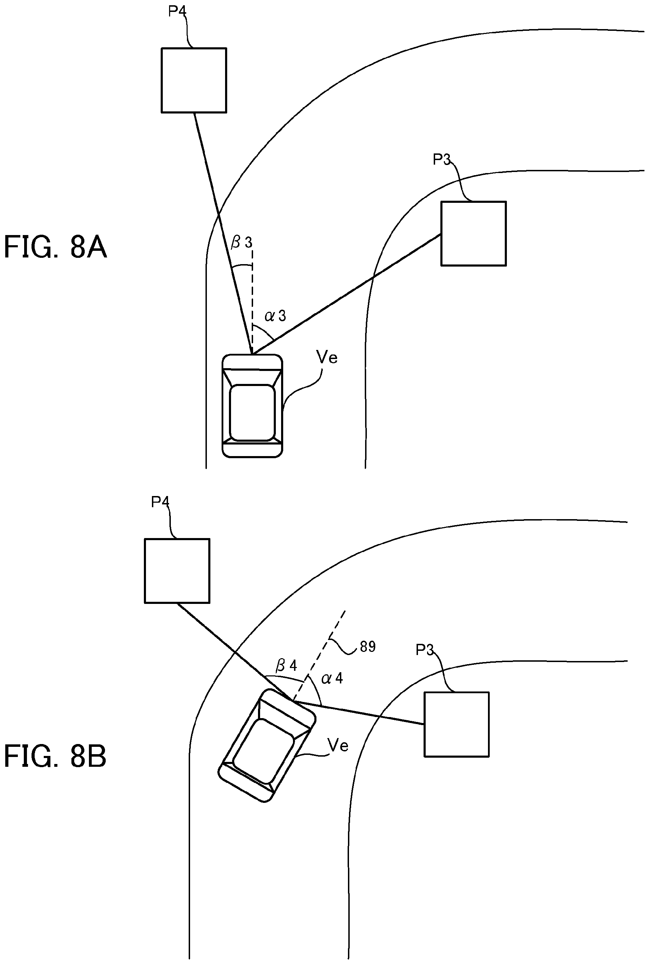

FIG. 8A is an overhead view illustrating the vehicle Ve running on a curved roadway existing between the facility P3 and the facility P4. FIG. 8B is an overhead view illustrating the example after a unit time has passed since the state of FIG. 8A.

In the case of FIG. 8A, as with the case of FIG. 6A, on the basis of the present position of the vehicle Ve, the traveling direction of the vehicle Ve and facility information on the facilities P3 and P4 registered on the facility information database, the control unit 55 identifies each of the facilities P3 and P4 as a low priority facility Ptag. Furthermore, the control unit 55 recognizes that the facility P3 exists on the right of the traveling direction of the vehicle Ve by the angle "α3" and that the facility P4 exists on the left of the traveling direction of the vehicle Ve by the angle "β3".

Then, in the case of FIG. 8B after a unit time has passed since the case of FIG. 8A, the control unit 55 calculates again the angles of the facilities P3 and P4, each of which is the low priority facility Ptag, with respect to the traveling direction of the vehicle. In this case, the control unit 55 recognizes that the facility P3 exists on the right of the traveling direction of the vehicle Ve by the angle "α4" and that the facility P4 exists on the left of the traveling direction of the vehicle Ve by the angle "β4". Then, in this case, the control unit 55 calculates the absolute value (i.e., |α4 - α3|) of the difference between the angle α3 and the angle α4 as the directional change rate dD corresponding to the facility P3 while calculating the absolute value (i.e., |β4 - β3|) of the difference between the angle β3 and the angle β4 as the directional change rate dD corresponding to the facility P4. In this case, it is noted that the directional change rate dD (i.e., |β4 - β3|) corresponding to the facility P4 existing outside the curve is higher than the directional change rate dD (i.e., |α4 -α3|) corresponding to the facility P3 existing inside the curve as illustrated in FIGS. 8A and 8B. Then, the control unit 55 compares each of the calculated directional change rate dD corresponding to the facility P3 and the calculated directional change rate dD corresponding to the facility P4 to the threshold dDth, and determines the display/non-display of the facility mark corresponding to each facility based on the comparison result.

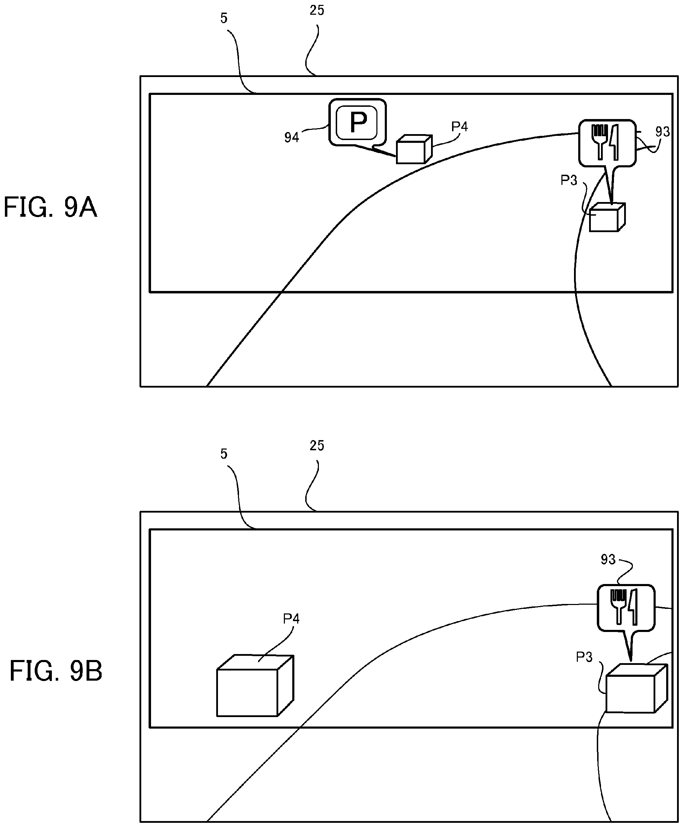

FIG. 9A is a display example of the head-up display 2 before the directional change rate dD corresponding to the facility P4 becomes equal to or higher than the threshold dDth. FIG. 9B is a display example of the head-up display 2 after the directional change rate dD corresponding to the facility P4 becomes equal to or higher than the threshold dDth.

In the case of FIG. 9A, since each of the directional change rate dD corresponding to the facilities P3 and P4 is lower than the threshold dDth, the control unit 55 displays on the combiner 5 the balloons 93 and 94 indicating the information on the facilities P3 and P4 at the position corresponding to the facilities P3 and P4 in the scenery, respectively.

In contrast, in the case of FIG. 9B, the control unit 55 does not display the balloon 94 since the control unit 55 recognizes that the directional change rate dD corresponding to the facility P4 is equal to or higher than the threshold dDth. Thereby, the control unit 55 can suppress the distraction of the driver's attention due to the rapid transition of the position of the balloon 94 that is the facility mark of the facility P4. On the other hand, the control unit 55 continues to display the balloon 93 since the directional change rate dD corresponding to the facility P3 is equal to or lower than the threshold dDth.

In this way, at the time of running on a curved roadway, the control unit 55 hides the facility mark of the facility existing on the outside of the curved roadway where the movement thereof in the front view is huge. Thereby, it is possible to preferably suppress the distraction of the driver's attention due to the rapid transition of the position of the facility mark.

Preferably, the control unit 55 sets the threshold dDth used at the time of running on a curved roadway to a value higher than the threshold dDth used at the time of running on a straight road. For example, when determining, on the basis of output values measured by the GPS receiver 18 and the angular velocity sensor 12, that the traveling direction is changing by an angle equal to or higher than a predetermined angle per unit time, the control unit 55 determines that the vehicle Ve is running on a curved roadway. In this case, the control unit 55 raises the threshold dDth by a predetermined value or a predetermined ratio.

In this way, the control unit 55 sets the threshold dDth used at the time of running on a curved roadway to a value higher than the threshold dDth used at the time of running on a straight road. Thereby, it is possible to preferably prevent hiding too many facility marks at the time of the curved roadway. In this case, the threshold dDth used at the time of the straight road is an example of "the first predetermined value" according to the present invention, and the threshold dDth used at the time of the curved roadway is an example of "the second predetermined value" according to the present invention.

As mentioned above, the head-up display 2 according to the embodiment includes the combiner 5 and the light source unit 6 and displays facility marks indicating facilities existing in front of the vehicle Ve. The combiner 5 displays the facility marks at positions corresponding to the facilities existing in the front scenery of the vehicle Ve, respectively. The control unit 55 of the light source unit 6 determines the display state of each of the facility marks corresponding to the low priority facility Ptag based on the directional change rate dD of the low priority facility Ptag. This enables the head-up display 2 to suppress the distraction of the driver's attention.

### [Modifications]

Hereinafter, preferred modifications of the above-mentioned embodiment will be described below. Each modification mentioned later can be applied to the above-mentioned embodiment in combination.

### (First Modification)

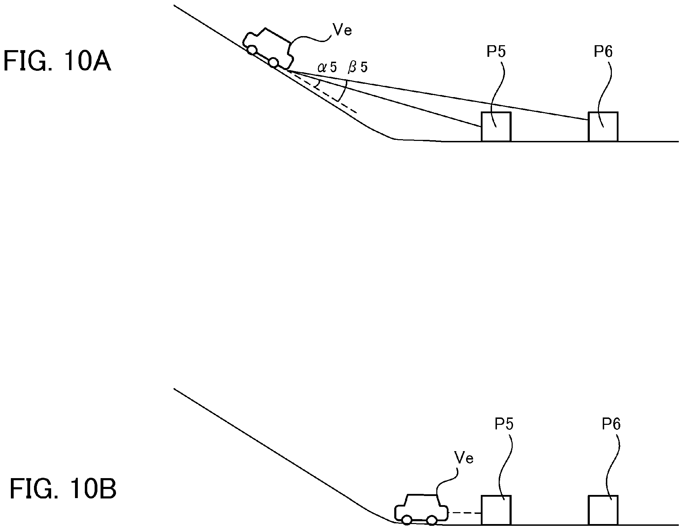

In the explanation in the above-mentioned section "(2) Concrete Examples", the control unit 55 calculates the directional change rate dD that is a rate of variation of direction (i.e., azimuth) on the horizontal plane. In addition to or instead of this, the control unit 55 may calculate a rate of variation of the vertical angle (i.e., elevation/depression angle) defined by the traveling direction of the vehicle Ve and the height of the facility as the directional change rate dD. In this case, the control unit 55 hides the facility mark provided that the corresponding directional change rate dD is equal to or higher than the threshold dDth. The description thereof will be given with reference to FIGS. 10A to 11B.

FIG. 10A is a side view of the vehicle Ve descending a slope road, and FIG. 10B illustrates the side view after a unit time has passed since the state of FIG. 10A. In the example illustrated in FIGS. 10A and 10B, there are a flat straight road down the slope road and facilities P5 and P6 on the right of the straight road.

Firstly, the control unit 55 identifies each of the facilities P5 and P6 as the low priority facility Ptag. Then, the control unit 55 recognizes that the elevation angle of the facility P5 with respect to the traveling direction of the vehicle Ve is equal to the angle "α5" and that the elevation angle of the facility P6 with respect to the traveling direction of the vehicle Ve is equal to the angle "β5" larger than the angle α5. In this case, for example, the control unit 55 calculates the angles α5 and β5 by recognizing the inclination angle of the vehicle Ve based on the output of an inclination sensor which is not shown and the difference in height between the vehicle Ve and each of the facilities based on information on the altitude of each location included in the map data.

In the case of FIG. 10B after the unit time has passed since the state of FIG. 10A, the control unit 55 re-calculates the elevation/depression angle of the facilities P5 and P6 each of which is the low priority facility Ptag with respect to the traveling direction of the vehicle Ve. In this case, the vehicle Ve exists ahead of the end of the slope road, and the position of the vehicle Ve has no difference in height from the facilities P5 and P6. The elevation/depression angles of the facilities with respect to the vehicle Ve are 0 degree, respectively. In this case, since the angle β5 is larger than the angle α5, the directional change rate dD corresponding to the facility P6 which is far from the slope road becomes higher than the directional change rate dD corresponding to the facility P5 which is close to the slope road.

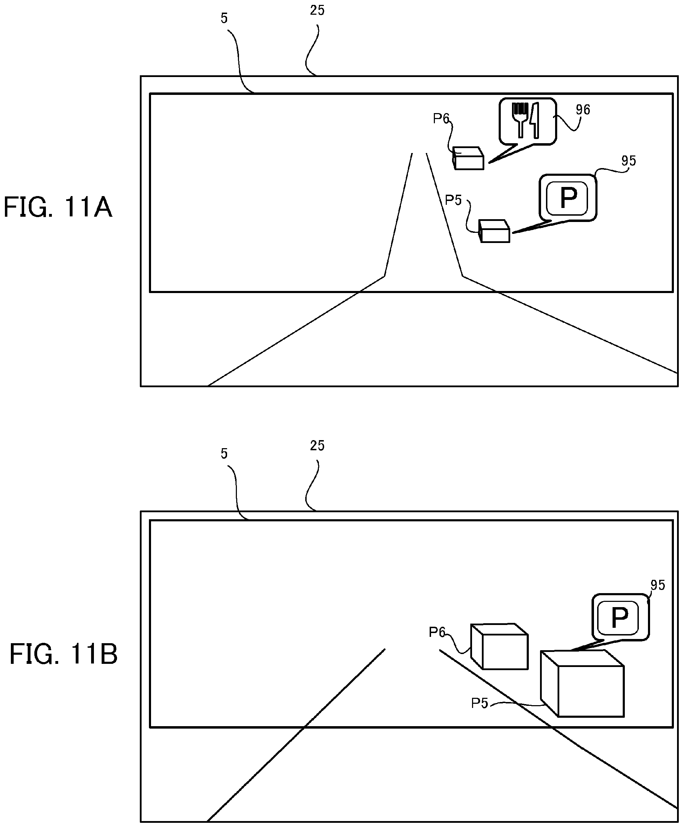

FIG. 11A is a display example of the head-up display 2 before the directional change rate dD corresponding to the facility P6 is equal to or higher than the threshold dDth, and FIG. 11B is a display example of the head-up display 2 after the directional change rate dD corresponding to the facility P6 is equal to or higher than the threshold dDth.

In the case of FIG. 11A, since the directional change rate dD corresponding to each of the facilities P5 and P6 is lower than the threshold dDth, the control unit 55 displays on the combiner 5 the balloons 95 and 96 indicating the information on the facilities P5 and P6 at the position corresponding to the facilities P5 and P6 in the scenery, respectively.

In the case of FIG. 11B, the control unit 55 does not display the balloon 96 since the control unit 55 recognizes that the directional change rate dD corresponding to the facility P6 is equal to or higher than the thresholddDth. In contrast, the control unit 55 continues to display the balloon 95 since the directional change rate dD corresponding to the facility P5 is equal to or lower than the threshold dDth.

In this way, the control unit 55 hides the facility mark corresponding to the low priority facility Ptag whose elevation/depression angle greatly varies at the time when the vehicle Ve runs on a slope road. Even in this case, the control unit 55 hides any facility mark whose display position rapidly transits thereby to suppress the distraction of the driver's attention.

### (Second Modification)

At step S103 in FIG. 5, the control unit 55 hides the facility mark corresponding to the low priority facility Ptag whose directional change rate dD is equal to or higher than the threshold dDth. However, the determination method of the display mode of the facility mark based on the directional change rate dD to which the present invention can be applied is not limited to the method.

Instead, the control unit 55 may adjust the luminance of facility marks so that a facility mark corresponding to the low priority facility Ptag whose directional change rate dD is equal to or higher than the threshold dDth becomes indistinctive compared to another facility mark corresponding to the low priority facility Ptag whose directional change rate dD is lower than the threshold dDth. For example, in this case, the control unit 55 sets the luminance of the facility mark corresponding to the low priority facility Ptag whose directional change rate dD is equal to or higher than the threshold dDth to a value lower than the original luminance to be outputted. Even in this case, it is possible to preferably suppress the distraction of the driver's attention due to the rapid transition of the position of the facility mark.

### (Third Modification)

The system controller 20 of the navigation device 1 may perform a part of the process of the flowchart in FIG. 5 instead of the control unit 55 of the head-up display 2 performing all the process of the flowchart in FIG. 5.

In this case, for example, as with the control unit 55 according to the embodiment, the system controller 20 identifies the low priority facility Ptag at step S101 and calculates the directional change rate dD of each low priority facility Ptag at step S102. At step S103, the system controller 20 sends the control unit 55 an instruction signal in order to display the facility mark whose directional change rate dD is lower than the threshold dDth and to hide the facility mark whose directional change rate dD is equal to or higher than the threshold dDth. On the basis of the instruction signal, the control unit 55 switches the display/non-display of each of the facility marks.

In this way, even according to the third modification, the display system 100 can preferably hide any facility mark whose display position rapidly transits thereby to suppress the distraction of the driver's attention.

### (Fourth Modification)

The display method to which the present invention can be applied is not limited to the display through the head-up display 2. Instead, the navigation device 1 may be connected to a camera capturing the front scenery of the vehicle Ve thereby to display facility marks over an image captured by the camera on the display unit 40.

In this case, the display system 100 has a camera capturing the front scenery of the vehicle Ve instead of the head-up display 2. The system controller 20 of the navigation device 1 performs the process of the flowchart of FIG. 5 while displaying an image captured by the camera on the display unit 40. In this case, at step S103, the system controller 20 displays a facility mark corresponding to the low priority facility Ptag whose directional change rate dD is lower than the threshold dDth so that the display position thereof corresponds to the low priority facility Ptag included in the photographed image displayed on the display unit 40. Additionally, the system controller 20 hides any facility mark corresponding to the low priority facility Ptag whose directional change rate dD is equal to or higher than the threshold dDth. Thereby, the display system 100 hides any facility mark whose display position in the photographed image of the front scenery rapidly transits thereby to suppress the distraction of the driver's attention. In this case, the system controller 20 is an example of "the display control unit", "the curve detection unit" and "the computer".

In another example, the navigation device 1 may display facility marks over a graphic image modeled on the front scenery of the vehicle Ve through the display unit 40. Even in this case, the system controller 20 hides any facility mark corresponding to the low priority facility Ptag whose directional change rate dD is equal to or higher than the threshold dDth thereby to suppress the distraction of the driver's attention.

### (Fifth Modification)

According to FIG.3, the head-up display 2 includes the combiner 5, and lets the driver see the virtual image Iv based on the light emitted from the light source unit 6 and reflected by the combiner 5. However, the configuration to which the present invention can be applied is not limited to the configuration. Instead, without the combiner 5, the head-up display 2 may let the driver see the virtual image Iv based on the light emitted from the light source unit 6 and reflected by the front window 25.

In addition, the mounting position of the light source unit 6 is not limited to the ceiling board 27. Instead, the light source unit 6 may be provided inside the dashboard. In this case, the dashboard has an opening for letting the light pass into the combiner 5 or the front window 25.

The head-up display according to the embodiment is mounted on a vehicle. However, the target on which the head-up display can be mounted is not limited to the vehicle. For example, it may be mounted on an aircraft or a game machine.

### (Sixth Modification)

Instead of the display examples illustrated in FIGS. 7A, 7B, 9A, 9B, 11A and 11B, the control unit 55 may display on the combiner 5 a character or string indicating the name or the category name of a facility as its facility mark to be displayed at a position corresponding to the facility.

The control unit 55 may deal with not only facilities providing services and/or products but also other various targets such as a signboard and a natural entity as a target object to display the mark thereof. Even in this case, the control unit 55 hides the mark to be put to the target object when the rate of the variation of the direction of the target object with respect to the vehicle Ve is equal to or higher than a predetermined threshold.

According to the embodiment, the control unit 55 switches the display/non-display of the facility mark of the low priority facility Ptag based on the directional change rate dD. Instead, the control unit 55 may switch the display/non-display of all facility marks based on the directional change rate dD regardless of the display priority thereof.

### BRIEF DESCRIPTION OF REFERENCE NUMBERS

- 1: Navigation device
- 2: Head-up display
- 4: Main unit
- 5: Combiner
- 6: Light source unit
- 8: Connecting member
- 25: Front window
- 100: Display system

## Claims

1. A display device configured to display a mark indicating an object existing in front of a moving body, the display device comprising:
a display unit configured to display the mark at a position corresponding to the object existing in a scenery in front of the moving body or in an image indicating the scenery; and the display device being **characterised by** a display control unit configured to change a display state of the mark depending on a change rate of a direction where the object exists with respect to a traveling direction of the moving body.

2. The display device according to claim 1,
wherein the display control unit is configured not to display the mark in a case that the change rate of the direction where the object exists is equal to or higher than a first predetermined value.

3. The display device according to claim 1,
wherein the display control unit is configured to set a luminance of the mark to be displayed in a case that the change rate of the direction where the object exists is equal to or higher than a first predetermined value to a value lower than the luminance of the mark to be displayed in a case that the change rate is lower than the first predetermined value.

4. The display device according to claim 2 or 3, further comprising
a curve detection unit configured to detect that the moving body is running on a curve,
wherein the display control unit is configured to change the display state of the mark depending on whether or not the change rate is equal to or higher than a second predetermined value higher than the first predetermined value when the curve detection unit detects that the moving body is running on a curve.

5. The display device according to any one of claims 1 to 4,
wherein the display control unit is configured to change the display state of the mark depending on the change rate of the direction where the object exists in height.

6. The display device according to any one of claims 1 to 5, further comprising
a setting unit configured to set a destination or a transit point,
wherein the display unit is configured to display a mark indicating the destination or the transit point at a position corresponding to the destination or the transit point, and
wherein the display control unit is configured to change the display state of the mark indicating the object other than the mark indicating the destination or the transit point depending on the change rate of the direction where the object exists.

7. The display device according to claim 6,
wherein the display unit is configured to display a mark of a facility serving as a landmark of a route to the destination or the transit point at a position corresponding to the facility serving as the landmark, and
wherein the display control unit is configured to change the display state of the mark indicating the object other than the mark indicating the facility serving as the landmark depending on the change rate of the direction where the object exists.

8. A control method executed by a display device which displays a mark indicating an object existing in front of a moving body, the control method comprising
a display control process to display the mark at a position corresponding to the object existing in a scenery in front of the moving body or in an image indicating the scenery, **characterised in that** the display control process changes a display state of the mark depending on a change rate of a direction where the object exists with respect to a traveling direction of the moving body.

9. A program executed by a computer which controls a display device to display a mark indicating an object existing in front of a moving body, making the computer function as:
a display control unit configured to display the mark at a position corresponding to the object existing in a scenery in front of the moving body or in an image indicating the scenery, **characterised in that** the display control unit is configured to change a display state of the mark depending on a change rate of a direction where the object exists with respect to a traveling direction of the moving body.

10. A storage medium storing the program according to claim 9.

## Patentansprüche

1. Eine Anzeigevorrichtung, die dazu eingerichtet ist, ein Zeichen, das ein vor einem sich bewegenden Körper vorhandenes Objekt angibt, anzuzeigen, wobei die Anzeigevorrichtung aufweist:
eine Anzeigeeinheit, welche dazu eingerichtet ist, das Zeichen an einer Position anzuzeigen, die mit dem Objekt, welches in einer Szenerie vor dem sich bewegenden Körper oder in einem Bild, das die Szenerie angibt, vorhanden ist, korrespondiert, und
wobei die Anzeigevorrichtung durch eine Anzeigesteuereinheit gekennzeichnet ist, welche dazu eingerichtet ist, einen Anzeigezustand des Zeichens zu verändern in Abhängigkeit von einer Änderungsrate einer Richtung, in welcher das Objekt vorhanden ist, bezüglich einer Bewegungsrichtung des sich bewegenden Körpers.

2. Die Anzeigevorrichtung gemäß Anspruch 1,
wobei die Anzeigesteuereinheit dazu eingerichtet ist, das Zeichen in einem Fall, dass die Änderungsrate der Richtung, in welcher das Objekt vorhanden ist, gleich oder größer einem ersten vorbestimmten Wert ist, nicht anzuzeigen.

3. Die Anzeigevorrichtung gemäß Anspruch 1,
wobei die Anzeigesteuereinheit dazu eingerichtet ist, eine Helligkeit des in einem Fall, dass die Änderungsrate der Richtung, in welcher das Objekt vorhanden ist, gleich oder größer als ein erster vorbestimmter Wert ist, anzuzeigenden Zeichens auf einen Wert zu setzen, welcher geringer als die Helligkeit des in einem Fall, dass die Änderungsrate geringer als der erste vorbestimmte Wert ist, anzuzeigenden Zeichens ist.

4. Die Anzeigevorrichtung gemäß Anspruch 2 oder 3, ferner aufweisend
eine Kurvendetektionseinheit, welche dazu eingerichtet ist, zu detektieren, dass der sich bewegende Körper sich auf einer Kurve bewegt,
wobei die Anzeigesteuereinheit dazu eingerichtet ist, den Anzeigezustand des Zeichens in Abhängigkeit davon zu verändern, ob die Änderungsrate gleich oder größer einem zweiten vorbestimmten Wert, der größer als der erste vorbestimmte Wert ist, ist oder ob nicht, wenn die Kurvendetektionseinheit detektiert, dass der sich bewegende Körper sich auf einer Kurve bewegt.

5. Die Anzeigevorrichtung gemäß irgendeinem der Ansprüche 1 bis 4,
wobei die Anzeigesteuereinheit dazu eingerichtet ist, den Anzeigezustand des Zeichens zu verändern in Abhängigkeit von der Änderungsrate der Richtung, in welcher das Objekt vorhanden ist, hinsichtlich Höhe.

6. Die Anzeigevorrichtung gemäß irgendeinem der Ansprüche 1 bis 5, ferner aufweisend
eine Einstelleinheit, welche dazu eingerichtet ist, einen Zielort oder einen Durchgangspunkt zu setzen,
wobei die Anzeigeeinheit dazu eingerichtet ist, ein Zeichen, welches den Zielort oder den Durchgangspunkt angibt, an einer Position, welche mit dem Zielort oder dem Durchgangspunkt korrespondiert, anzuzeigen, und
wobei die Anzeigesteuereinheit dazu eingerichtet ist, den Anzeigezustand des das Objekt angebenden Zeichens, anders als das Zeichen, welches den Zielort oder den Durchgangspunkt angibt, in Abhängigkeit von der Änderungsrate der Richtung, in welcher das Objekt vorhanden ist, zu verändern.

7. Die Anzeigevorrichtung gemäß Anspruch 6,
wobei die Anzeigeeinheit dazu eingerichtet ist, ein Zeichen einer Einrichtung, welche als eine Landmarke einer Route zu dem Zielort oder dem Durchgangspunkt dient, an einer Position, welche mit der Einrichtung, welche als die Landmarke dient, korrespondiert, anzuzeigen, und
wobei die Anzeigesteuereinheit dazu eingerichtet ist, den Anzeigezustand des das Objekt angebenden Zeichens, anders als das Zeichen, welches die Einrichtung, die als die Landmarke dient, angibt, in Abhängigkeit von der Änderungsrate der Richtung, in welcher das Objekt vorhanden ist, zu verändern.

8. Ein Steuerverfahren, welches durch eine Anzeigevorrichtung, die ein Zeichen, das ein vor einem sich bewegenden Körper vorhandenes Objekt angibt, anzeigt, ausgeführt wird, wobei das Steuerverfahren aufweist
einen Anzeigesteuerungsvorgang zum Anzeigen des Zeichens an einer Position, die mit dem Objekt, das in einer Szenerie vor dem sich bewegenden Körper oder in einem Bild, das die Szenerie angibt, vorhanden ist, korrespondiert,
**gekennzeichnet dadurch, dass**
der Anzeigesteuerungsvorgang einen Anzeigezustand des Zeichens verändert in Abhängigkeit von einer Änderungsrate einer Richtung, in welcher das Objekt vorhanden ist, bezüglich einer Bewegungsrichtung des sich bewegenden Körpers.

9. Ein Programm, welches durch einen Computer ausgeführt wird, der eine Anzeigevorrichtung zum Anzeigen eines Zeichens, das ein vor einem sich bewegenden Körper vorhandenes Objekt angibt, steuert, wobei es den Computer funktionieren lässt als:
eine Anzeigesteuereinheit, welche dazu eingerichtet ist, das Zeichen an einer Position anzuzeigen, die mit dem Objekt, welches in einer Szenerie vor dem sich bewegenden Körper oder in einem Bild, das die Szenerie angibt, vorhanden ist, korrespondiert,
**gekennzeichnet dadurch, dass**
die Anzeigesteuereinheit dazu eingerichtet ist, einen Anzeigezustand des Zeichens zu verändern in Abhängigkeit von einer Änderungsrate einer Richtung, in welcher das Objekt vorhanden ist, bezüglich einer Bewegungsrichtung des sich bewegenden Körpers.

10. Ein Speichermedium, welches das Programm gemäß Anspruch 9 speichert.

## Revendications

1. Dispositif d'affichage configuré de façon à afficher un repère qui indique un objet qui existe devant un corps qui se déplace, le dispositif d'affichage comprenant :
une unité d'affichage configurée de façon à afficher le repère au niveau d'une position qui correspond à l'objet qui existe dans un paysage devant le corps qui se déplace ou dans une image qui indique le paysage ; et
le dispositif d'affichage étant **caractérisé par** une unité de commande d'affichage configurée de façon à modifier un état d'affichage du repère selon une vitesse de modification d'une direction où l'objet existe par rapport à une direction de déplacement du corps qui se déplace.

2. Dispositif d'affichage selon la revendication 1,
dans lequel l'unité de commande d'affichage est configurée de façon à ne pas afficher le repère dans un cas où la vitesse de modification de la direction où l'objet existe, est égale ou supérieure à une première valeur prédéterminée.

3. Dispositif d'affichage selon la revendication 1,
dans lequel l'unité de commande d'affichage est configurée de façon à fixer la luminance du repère à afficher, dans un cas où la vitesse de modification de la direction où l'objet existe, est égale ou supérieure à une première valeur prédéterminée, à une valeur inférieure à la luminance du repère à afficher dans un cas où la vitesse de modification est inférieure à la première valeur prédéterminée.

4. Dispositif d'affichage selon la revendication 2 ou la revendication 3, comprenant en outre :
une unité de détection de courbe configurée de façon à détecter le fait que le corps qui se déplace, suit une courbe ;
dans lequel l'unité de commande d'affichage est configurée de façon à modifier l'état d'affichage du repère selon que la vitesse de modification est ou non égale ou supérieure, à une seconde valeur prédéterminée supérieure à la première valeur prédéterminée lorsque l'unité de détection de courbe détecte le fait que le corps qui se déplace, suit une courbe.

5. Dispositif d'affichage selon l'une quelconque des revendications 1 à 4,
dans lequel l'unité de commande d'affichage est configurée de façon à modifier en hauteur l'état d'affichage du repère selon que la vitesse de modification de la direction où l'objet existe.

6. Dispositif d'affichage selon l'une quelconque des revendications 1 à 5, comprenant en outre :
une unité de paramétrage configurée de façon à fixer une destination ou un point de passage ;
dans lequel l'unité d'affichage est configurée de façon à afficher un repère qui indique la destination ou le point de passage au niveau d'une position qui correspond à la destination ou au point de passage ; et
dans lequel l'unité de commande d'affichage est configurée de façon à modifier l'état d'affichage du repère qui indique l'objet différemment du repère qui indique la destination ou le point de passage selon la vitesse de modification de la direction où l'objet existe.

7. Dispositif d'affichage selon la revendication 6,
dans lequel l'unité d'affichage est configurée de façon à afficher un repère d'une installation qui sert de point de repère d'une route vers la destination ou le point de passage au niveau d'une position qui correspond à l'installation qui sert de point de repère ; et
dans lequel l'unité de commande d'affichage est configurée de façon à modifier l'état d'affichage du repère qui indique l'objet différemment du repère qui indique l'installation qui sert de point de repère selon la vitesse de modification de la direction où l'objet existe.

8. Procédé de commande exécuté par un dispositif d'affichage qui affiche un repère qui indique un objet qui existe devant un corps qui se déplace, le procédé de commande comprenant :
un processus de commande d'affichage consistant à afficher le repère au niveau d'une position qui correspond à l'objet qui existe dans un paysage devant le corps qui se déplace ou dans une image qui indique le paysage ;
**caractérisé en ce que** le processus de commande d'affichage modifie un état d'affichage du repère selon une vitesse de modification d'une direction où l'objet existe par rapport à une direction de déplacement du corps qui se déplace.

9. Programme exécuté par un ordinateur qui commande un dispositif d'affichage consistant à afficher un repère qui indique un objet qui existe devant un corps qui se déplace, l'ordinateur fonctionnant alors en tant que :
unité de commande d'affichage configurée de façon à afficher le repère au niveau d'une position qui correspond à l'objet qui existe dans un paysage devant le corps qui se déplace ou dans une image qui indique le paysage ;
**caractérisé en ce que** l'unité de commande d'affichage est configurée de façon à modifier un état d'affichage du repère selon une vitesse de modification d'une direction où l'objet existe par rapport à une direction de déplacement du corps qui se déplace.

10. Support de stockage qui stocke le programme selon la revendication 9.
